# EUROPÄISCHE PATENTSCHRIFT

(11) **EP 3 123 602 B1**
(45) Veröffentlichungstag und Bekanntmachung des Hinweises auf die Patenterteilung: **01.12.2021**
(21) Anmeldenummer: 15709475.6
(22) Anmeldetag: 11.03.2015
(51) Int. Cl.: H02M 1/42, H05B 45/3725

(54) **LEISTUNGSFAKTORKORREKTURSCHALTUNG (PFC) MIT THD-KORREKTUR**
POWER FACTOR CORRECTION CIRCUIT (PFC) WITH THD CORRECTION
CIRCUIT DE CORRECTION DE FACTEUR DE PUISSANCE (PFC) À CORRECTION DE THD

(30) Priorität: 25.03.2014 DE 102014205520
(43) Veröffentlichungstag der Anmeldung: 01.02.2017
(73) Patentinhaber: Tridonic GmbH & Co. KG, 6851 Dornbirn (AT)
(72) Erfinder: LOCHMANN, Frank, 88147 Esseratsweiler (DE); MARTE, Patrick, A-6840 Götzis (AT); BACHMANN, Johannes, A-6840 Götzis (AT)
(74) Vertreter: Rupp, Christian
(86) Internationale Anmeldenummer: PCT/EP2015/055029
(87) Internationale Veröffentlichungsnummer: WO 2015/144433

(56) Entgegenhaltungen:
- DE-A1-102012 011 755
- US-A- 4 437 146
- US-A1- 2008 272 744
- US-A1- 2010 246 226
- US-B1- 6 388 429
- ZHANG W ET AL: "A new duty cycle parallel control method and FPGA implementation for AC-DC converters with power factor correction (PFC)", APPLIED POWER ELECTRONICS CONFERENCE AND EXPOSITION, 2005. APEC 2005. TWENTIETH ANNUAL IEEE AUSTIN, TX, USA 6-10 MARCH 2005, PISCATAWAY, NJ, USA,IEEE, US, Bd. 2, 6. März 2005 (2005-03-06), Seiten 805-811Vol.2, XP010809328, DOI: 10.1109/APEC.2005.1453072 ISBN: 978-0-7803-8975-5

## Beschreibung

Die Erfindung betrifft eine Schaltung zur aktiv getakteten Leistungsfaktorkorrektur und ein Verfahren zum Steuern einer solchen Schaltung. Insbesondere betrifft die Erfindung das technische Gebiet der Leistungsfaktorkorrektur bei Betriebsgeräten für Leuchtmittel, insbesondere LEDs.

Eine Leistungsfaktorkorrektur (Power factor correction, PFC), wird eingesetzt, um Oberwellenströme in einem Eingangsstrom zu beseitigen bzw. zumindest zu verringern. Oberwellenströme können insbesondere bei nicht-linearen Verbrauchern auftreten, wie beispielsweise bei Gleichrichtern mit nachfolgender Glättung in Netzteilen, da bei derartigen Verbrauchern der Eingangsstrom der sinusförmigen Eingangsspannung in seiner Phase verschoben und nicht-sinusförmig verzehrt wird (beispielsweise durch harmonische Oberwellen). Den auftretenden Oberwellen kann durch eine dem jeweiligen Gerät vorgeschaltete aktive oder getaktete Leistungsfaktorkorrekturschaltung entgegen gewirkt werden.

Leistungsfaktorkorrekturschaltungen werden auch bei Betriebsgeräten für Leuchtmittel eingesetzt, die beispielsweise in elektronischen Vorschaltgeräten oder LED-Konvertern zum Einsatz kommen. Die Verwendung derartiger Schaltungen bei Geräten zum Betreiben von Leuchtmitteln ist wünschenswert, da Normen die zulässige Rücksendung von Oberwellen in das Versorgungsnetz beschränken.

Für die Leistungsfaktorkorrekturschaltungen wird häufig eine Schaltungstopologie verwendet, die auf der Topologie eines Aufwärtswandlers (Boost-Konverter) beruht. Dabei wird eine mit einer gleichgerichteten Wechselspannung versorgte Induktivität oder Spule durch Einschalten und Ausschalten eines steuerbaren Schalters mit Energie geladen, bzw. entladen. Der Entladestrom der Induktivität fließt über eine Diode zu einer Ausgangskapazität sodass am Ausgang eine gegenüber der Eingangsspannung erhöhte Gleichspannung abgegriffen werden kann. Ebenso sind jedoch auch andere Konverterarten in Leistungsfaktorkorrekturschaltungen üblich, wie beispielsweise Flyback-Konverter (isolierter Sperrwandler) oder Buck-Konverter (Tiefsetzsteller).

Leistungsfaktorkorrekturschaltungen können eine Steuerschaltung aufweisen, die die Stromaufnahme kontrolliert. Dazu kann beispielsweise die Einschaltzeitdauer (Tₒₙ-Zeit) für den verwendeten Schalter eingestellt werden, also die Zeit, in der der Schalter sich in einem Ein-Zustand befindet, um Energie in der Spule zu speichern.

Durch unerwünschte Kapazitäten im Eingangsbereich kann es dazu kommen, dass eine oder mehrere der harmonischen Oberwellen/Oberschwingungen nicht in dem gewünschten Umfang unterdrückt werden. Dies kann zu einem Stromspitzenwert (Strompeak) in der Stromaufnahme der Leistungsfaktorkorrekturschaltung bei einem Wiederanstieg der Eingangsspannung führen.

Die vorliegende Erfindung bezieht sich nun insbesondere auf eine Klirrfaktor-Korrektur (THD-Korrektur, wobei THD für Total Harmonic Distortion steht) und bezieht sich insbesondere auf die Verbesserung einer aktiv getakteten Leistungsfaktorkorrekturschaltung.

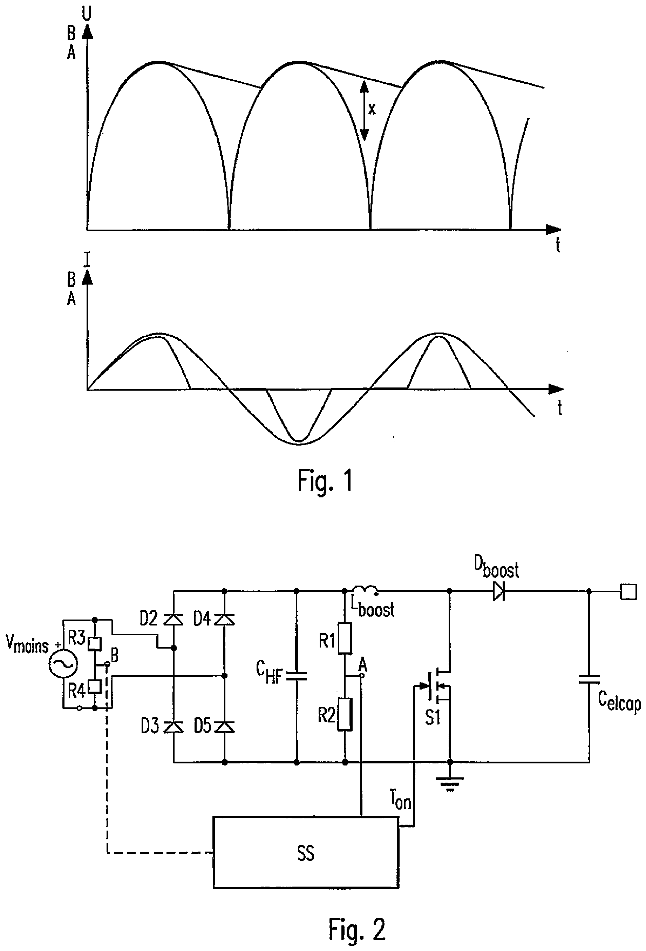

Es ist dabei bekannt, dass nach der Gleichrichtung der Netzwechselspannung in der Leistungsfaktorkorrekturschaltung ein Kondensator vorgesehen ist, der insbesondere als Filterkondensator fungiert. Ein solcher Kondensator ist beispielsweise in der WO 2012145772 A1 in Fig. 1 als Kondensator 26 gezeigt.

Dieser dem Gleichrichter nachgeschaltete Kondensator verursacht, dass, nachdem die gleichgerichtete Wechselspannung in ihrem Verlauf einen Scheitelwert angenommen hat, die Spannung der eigentlichen PFC-Schaltung (Induktivität, Schalter, Diode) nicht tatsächlich weiter dem gleichgerichteten Sinusverlauf der Netzwechselspannung folgt und nach dem Scheitelwert ebenfalls absinkt, sondern vielmehr relativ flach abfällt, da der Kondensator die PFC-Schaltung noch weiter mit Spannung versorgt.

Ein Wiederaufladen und eine Stromaufnahme durch die PFC-Schaltung erfolgt dann erst wieder zu einem Zeitpunkt, zu dem die nächste ansteigende Netzhalbwelle eine Spannung oberhalb der abgesunkenen Kondensatorspannung erreicht.

Dies führt jedoch dazu, dass die Stromaufnahme der PFC-Schaltung nicht der im Wesentlichen sinusförmigen Netzwechselspannung bzw. der gleichgerichteten Netzwechselspannung folgt und darüber hinaus auch die Stromaufnahme nur in relativ kurzen Abschnitten erfolgt, nämlich immer dann, wenn die aktuelle Amplitude der gleichgerichteten Netzwechselspannung größer ist als die aktuell anliegende Kondensatorspannung.

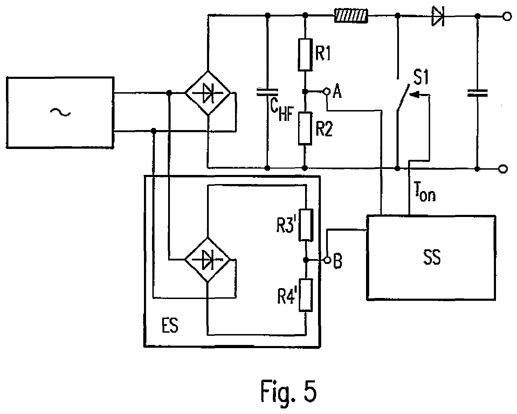

Ein entsprechender Kurvenverlauf ist in Fig. 1 gezeigt, die einen Spannungsverlauf an Messpunkten A und B einer Schaltung, wie sie exemplarisch in Fig. 5 gezeigt ist, wiedergibt.

In Fig. 1 ist oben einerseits ein Verlauf einer gleichgerichteten Wechselspannung an dem Kondensator C_{HF} gezeigt, die an dem Messpunkt A erfasst werden kann (hellgraue Kurve). Die Spannung an dem Kondensator C_{HF} entspricht der Spannung vor der Induktivität L_{boost} der PFC-Schaltung. Weiter ist ein Spannungsverlauf aufgetragen, der an dem Messpunkt B der Schaltung aus Fig. 5 erfasst werden kann (dunkelgraue Kurve). Der Faktor X in Fig. 1 zeigt dabei die Abweichung an, die durch die Verwendung des Filterkondensators C_{HF} zwischen gleichgerichteter Netzwechselspannung und der Spannung an dem Kondensator C_{HF} (entspricht der gleichgerichteten Wechselspannung) entsteht. In Fig. 1 unten ist eine entsprechende Stromaufnahme der PFC-Schaltung dargestellt, die nach dem anfänglichen Laden des Kondensators nur noch dann erfolgt, wenn die gleichgerichtete Netzwechselspannung über die Kondensatorspannung am Kondensator C_{HF} steigt.

Eine Leistungsfaktorkorrekturschaltung gemäß dem Oberbegriff des beigefügten Anspruches 1 ist in der US 2010/246226 A1 beschrieben.

Eine Leistungsfaktorkorrekturschaltung mit einem Gleichrichter, einem dem Gleichrichter nachgeordneten Filterkondensator, einem dem Filterkondensator nachgeordneten Aufwärtswandler und einer Steuerschaltung, die basierend auf der von dem Filterkondensator gefilterten Spannung und der Ausgangsspannung der Leistungsfaktorkorrekturschaltung den Aufwärtswandler steuert, ist in der US 6 388 429 B1 sowie der US 2008/272744 A1 offenbart.

Die der Erfindung zugrundeliegende Aufgabe besteht darin, eine Leistungsfaktorkorrekturschaltung, ein Betriebsgerät mit einer Leistungsfaktorkorrekturschaltung, eine Leuchte mit einer Leistungsfaktorkorrekturschaltung und ein Verfahren zur Steuerung einer Leistungsfaktorkorrekturschaltung zu schaffen, mit denen die Korrektur des Verlaufs des von der einen Filterkondensator aufweisenden Leistungsfaktorkorrekturschaltung aus dem Netz aufgenommenen Stroms verbessert werden kann bzw. die Stromaufnahme sinusförmiger verläuft.

Diese Aufgabe wird gemäß den Merkmalen der unabhängigen Patentansprüche gelöst. Die Erfindung wird durch die Merkmale der abhängigen Ansprüche weitergebildet.

In einem Aspekt wird eine aktiv getaktete Leistungsfaktorkorrekturschaltung (PFC-Schaltung) bereitgestellt, aufweisend einen Eingang, an dem eine Netzwechselspannung zuführbar ist, einen Gleichrichter, einen ausgehend von dem Gleichrichter gespeisten Filterkondensator, und einen Schalter, der durch eine Steuerschaltung steuerbar ist, um eine Induktivität, welche nachfolgend auf den Filterkondensator angeordnet ist, während einer Einschaltzeitdauer zu laden und während einer Ausschaltzeitdauer zu entladen. Die Steuerschaltung ist dazu eingerichtet, eine Einschaltzeitdauer des Schalters für eine Regelung der Ausgangsspannung der Leistungsfaktorkorrekturschaltung zu bestimmen, eine Kondensatorspannung über dem Filterkondensator zu messen und abhängig von der Messung der Kondensatorspannung die Einschaltzeitdauer des Schalters zu verändern, wobei die Steuerschaltung dazu eingerichtet ist, eine Sollwertkurve, deren Verlauf der Netzwechselspannung, bei der jede zweite Halbwelle invertiert ist, entspricht, zu ermitteln, die Kondensatorspannung mit der Sollwertkurve zu vergleichen und abhängig davon die bestimmte Einschaltzeitdauer des Schalters zu verändern, um die Kondensatorspannung auf die Sollwertkurve zu regeln.

Die Steuerschaltung kann den Verlauf der vorzugsweise gleichgerichteten Netzwechselspannung durch Messung erfassen. Die Steuerschaltung kann zu einem Zeitpunkt einen Spannungswert der Netzwechselspannung und/oder einen eine Spannung wiedergebenden Wert bestimmen, und diesen insbesondere aus einer gemessenen oder vorgegebenen Sollwertkurve ermitteln.

Die Steuerschaltung kann die Einschaltzeitdauer des Schalters verlängern, während der Verlauf der erfassten vorzugsweise gleichgerichteten Netzwechselspannung und/oder der vorgegebenen oder gemessenen Sollwertkurve nach Erreichen eines Scheitelwerts in Richtung Nulldurchgang verläuft.

Die Steuerschaltung kann die Einschaltzeitdauer des Schalters verkürzen, während der Verlauf der erfassten vorzugsweise gleichgerichteten Netzwechselspannung und/oder der gemessenen oder vorgegebenen Sollwertkurve in Richtung eines Scheitelwerts verläuft.

Die Steuerschaltung kann die Einschaltdauer des Schalters solange verändern, bis die Kondensatorspannung im Wesentlichen den Wert der, insbesondere ansteigenden, gleichgerichteten Netzwechselspannung und/oder der gemessenen oder vorgegebenen Sollwertkurve annimmt.

Die Sollwertkurve kann in ihrem zeitlichen Verlauf dem zeitlichen Verlauf einer gleichgerichteten Netzwechselspannung entsprechen.

Die Steuerschaltung kann die Kondensatorspannung mit der gleichgerichteten Netzwechselspannung und/oder der gemessenen oder vorgegebenen Sollwertkurve vergleichen und abhängig davon die Einschaltzeitdauer des Schalters regeln/steuern. Die Steuerschaltung kann insbesondere an wenigstens einem bestimmten Zeitpunkt einen Wert der gleichgerichteten Netzwechselspannung und/oder der gemessenen oder vorgegebenen Sollwertkurve mit dem Wert der Kondensatorspannung vergleichen.

Die Steuerschaltung kann die Einschaltzeitdauer des Schalters als Stellgröße bestimmen.

Die gemessene oder vorgegebene Sollwertkurve kann in einem mit der Steuerschaltung verbundenen Speicher, insbesondere in einer Tabelle, gespeichert sein.

Die Gleichrichtung der erfassten Netzwechselspannung kann durch einen zweiten Gleichrichter erfolgen. Die Erfassung der Netzwechselspannung/die Messung der Sollwertkurve kann an einem dem zweiten Geleichrichter nachgeschalteten Spannungsteiler erfolgen.

In einem weiteren Aspekt wird eine Leuchte mit einer Leistungsfaktorkorrekturschaltung bereitgestellt, wie sie vorstehend beschrieben ist, insbesondere eine Leuchte mit LED Leuchtmitteln.

In einem noch weiteren Aspekt wird ein Betriebsgerät für ein Leuchtmittel, insbesondere LEDs, bereitgestellt aufweisend eine Leistungsfaktorkorrekturschaltung wie sie vorstehend beschrieben ist.

In wiederum einem weiteren Aspekt wird ein Verfahren zur Steuerung einer aktiv getakteten Leistungsfaktorkorrekturschaltung bereitgestellt, die einen Eingang aufweist, an dem eine Netzwechselspannung zuführbar ist, einen Gleichrichter, einen ausgehend von dem Gleichrichter gespeisten Filterkondensator, und einen Schalter, der durch eine Steuerschaltung steuerbar ist, um eine Induktivität während einer Einschaltzeitdauer zu laden und während einer Ausschaltzeitdauer zu entladen, mit den Schritten:
- Bestimmen einer Einschaltzeitdauer des Schalters (S1) für eine Regelung der Ausgangsspannung (Uₒᵤₜ) der Leistungsfaktorkorrekturschaltung (PFC),
- Messen einer Kondensatorspannung über dem Filterkondensator,
- Ermitteln einer Sollwertkurve, deren Verlauf der Netzwechselspannung, bei der jede zweite Halbwelle invertiert ist, entspricht,
- Vergleichen der Kondensatorspannung mit der Sollwertkurve, und
- Ändern der Einschaltzeitdauer des Schalters auf der Grundlage des Vergleichs, um somit die Kondensatorspannung auf die Sollwertkurve zu regeln.

Die Erfindung sieht vor, dass die Steuerschaltung der aktiv getakteten Leistungsfaktorkorrekturschaltung eine Spannung über dem Kondensator misst. Dies ist zu unterscheiden von der Messung der Eingangsspannung wie sie nach dem Stand der Technik erfolgt.

Bevorzugt erfolgt gemäß der Erfindung eine Regelung dahingehend, dass die Kondensatorspannung möglichst einer vorgegebenen Sollwertkurve, die vorzugsweise im Wesentlichen wie die Netzwechselspannung bzw. die gleichgerichtete Netzwechselspannung verläuft, folgt, und insbesondere einer absinkenden Sinuskurve der gleichgerichteten Netzwechselspannung (obwohl die Netzwechselspannung nicht notwendigerweise einen idealen sinusförmigen Verlauf aufweist wird im Folgenden zum Zweck der Vereinfachung von einem sinusförmigen Verlauf ausgegangen; bei einer gleichgerichteten Netzwechselspannung ist dabei jede zweite Halbwelle invertiert).

Abhängig von einem Vergleich der gemessenen KondensatorSpannung und einem Sollwert, der entweder durch die Erfassung der Netzwechselspannung bestimmt oder durch eine, in einem mit der Steuerschaltung verbundenen Speicher gespeicherten gemessenen oder vorgegebenen Sollwertkurve definiert wird, ermittelt ein Regelalgorithmus, wie die Einschaltzeitdauer für den Schalter der Leistungsfaktorkorrektur-/PFC-Schaltung verändert werden soll.

Der Sollwert bestimmt sich durch die Sollwertkurve insbesondere dadurch, dass der Sollwert aus Sollwertkurve zeitlich synchron zu der Messung der Kondensatorspannung erfolgt. Die Sollwertkurve kann dabei z.B. durch Messung der zugeführten Netzwechselspannung für eine bestimmte Zeitdauer durch die Steuerschaltung erfasst und gespeichert werden, so dass insbesondere nach einer initialen Erfassung auf die gespeicherte Sollwertkurve zugegriffen werden kann.

Insbesondere wird die Einschaltzeitdauer verlängert, wenn die Netzwechselspannung, oder entsprechend die Sollwertkurve, nach Erreichen ihres Scheitelwerts abfällt, oder verkürzt, wenn die Netzwechselspannung wieder ansteigt (hierbei wird von der Repräsentation der gleichgerichteten Netzwechselspannungshalbwellen im positiven Bereich ausgegangen, wie in Fig. 1 gezeigt; bei invertierter Darstellung erfolgt ein Anstieg nach Erreichen des Scheitelwerts und Abfall nach Erreichen des Nullpunkts um Scheitelwert hin). Umso mehr beispielsweise die Einschaltzeitdauer verlängert wird, desto steiler wird die Spannung an dem Filterkondensator absinken. Entsprechend würde bei einer Verkürzung der Einschaltzeitdauer des Schalters der Abfall des Spannungsverlaufs der Kondensatorspannungskurve flacher.

In einer Regelschleife, die die Ausgangsspannung der Leistungsfaktorkorrekturschaltung regelt, wird bereits eine normalerweise im Wesentlichen konstante Einschaltzeitdauer bzw. eine sich nur sehr langsam verändernde Einschaltzeitdauer bestimmt. Dieser überlagert wird nun die im Verhältnis dazu schnelle Veränderung der Einschaltzeitdauer, so dass die Kondensatorspannung und die Stromaufnahme sinusförmiger verlaufen.

Einerseits wird also durch eine Verlängerung der Einschaltzeitdauer die Kondensatorspannung stärker absinken als in Fig. 1 durch die dunkelgraue Kurve gezeigt. Darüber hinaus wird es durch dieses stärkere Absinken auch zu einem längeren Ladezeitraum kommen, so dass die stärker abgesunkene Kondensatorspannung unter Stromaufnahme in einem größeren Hub wieder bis zur Erreichung des Scheitelwerts/Spitzenwerts (Peak) der gleichgerichteten Netzwechselspannung aufgeladen wird.

Es erfolgt folglich in einer bevorzugten Ausführungsform die Regelung der Ausgangsspannung in einer Regelschleife, die eine Vorgabe für eine Sollwertkurve für den Spannungsverlauf über den Kondensator mit einbezieht. Grundsätzlich ist aber auch vorstellbar, dass dies auch mittels einer Tabelle oder einer Funktion in einer reinen Vorwärtssteuerung der Einschaltzeitdauer erzielt werden kann. Eine ,echte' Regelung (Feedback Control) hat indessen den Vorteil, diese sich automatisch auf unterschiedliche Lastgegebenheiten (Art der LED-Strecke, Dimmzustand, etc.) einstellen kann.

Gemäß einer bevorzugten Ausführungsform wird der Spannungsverlauf der vorzugsweise gleichgerichteten Netzwechselspannung kontinuierlich erfasst und es erfolgt somit ein Vergleich der gemessenen vorzugsweise gleichgerichteten Netzwechselspannung mit der gemessenen Kondensatorspannung, wobei dieser Vergleich die Regeldifferenz darstellt/ergibt und der Regelalgorithmus abhängig von dieser Regeldifferenz die Einschaltzeitdauer verändert und insbesondere verlängert.

Es kann jedoch auch vorgesehen sein, dass eine Erfassung durch eine Steuerschaltung nur zu diskreten Zeitpunkten erfolgt, wobei die Zeitabstände der Messungen einstellbar und insbesondere für die Erfassung der vorzugsweise gleichgerichteten Netzwechselspannung und das Messen der Kondensatorspannung verschieden sein können.

Insbesondere wird also, nachdem die vorzugsweise gleichgerichtete Netzwechselspannung einen Scheitelpunkt erreicht hat, die Einschaltzeitdauer stetig wachsend ansteigen, bis die gemessene Kondensatorspannung auf ein Niveau im Bereich der wieder ansteigenden Netzwechselspannung abgesunken ist. Danach wird die Einschaltzeitdauer zuerst sehr stark und dann zunehmend weniger stark absinken, um eine lediglich minimal veränderte Einschaltzeitdauer im Bereich des nächsten Scheitels der gleichgerichteten Netzwechselspannung zu erreichen.

Das Erfassen der Kondensatorenspannung erfolgt gemäß der Erfindung durch eine Steuerschaltung SS vorzugsweise durch einen Spannungsteiler R1, R2 am Messpunkt A, der dem Filterkondensator C_{HF} ausgehend von der Gleichrichtung (Gleichrichter D2, D3, D4, D5) nachgeschaltet ist, wie es in Fig. 2 gezeigt ist. Dem Filterkondensator C_{HF} ist an dessen mit den Dioden D2 und D4 des Gleichrichters verbundenem Anschluss die Induktivität L_{boost} nachgeschaltet. Der andere Anschluss der Induktivität L_{boost} ist mit dem Verbindungspunkt vom getakteten Schalter S1 und PFC-Diode D_{boost} verbunden. Über die PFC-Diode D_{boost} wird durch die Taktung des Schalters S1 die Energie von der Induktivität L_{boost} jeweils in der Ausschaltphase des Schalters S1 in den Glättungskondensator C_{elcap} (als Ausgangskapazität) übertragen. Ausgehend vom dem Glättungskondensator C_{elcap} kann direkt eine LED als Lichtquelle oder auch ein nachfolgender Gleichspannungswandler zum Betreiben einer LED gespeist werden.

Die Erfassung der Netzwechselspannung erfolgt vorzugsweise durch eine Messung der Spannung vor dem Gleichrichter D2, D3, D4, D5, beispielsweise am Messpunkt B mittels eines Spannungsteilers R3, R4. Die Verbindung von der Steuerschaltung SS zu dem Messpunkt B zur Erfassung der vorzugsweise gleichgerichtet erfassten Netzwechselspannung ist gestrichelt dargestellt, da statt der Erfassung, auch eine Sollwertvorgabe durch eine hinterlegte Funktion oder eine Sollwertkurve erfolgen kann, die z.B. in Form einer Nachschlagetabelle (Look-Up-Tabelle) hinterlegt sein kann, vorzugsweise in einem von der Steuerschaltung SS zugreifbaren Speicher (nicht gezeigt).

Die Erfassung der Sollwertkurve bzw. des Verlaufs der gleichgerichteten Netzwechselspannung kann dabei in einer separaten Erfassungsschaltung ES erfolgen, die beispielsweise einen zweiten Gleichrichter und einen diesem nachgelagerten zweiten Spannungsteiler R3', R4' aufweist. Eine entsprechende Ausgestaltung ist in Fig. 5 gezeigt.

Es ist jedoch auch möglich, dass die Erfassung der Netzwechselspannung als Wechselspannungsgröße mit positiven und negativen Werten an einem der Gleichrichtung vorgeschalteten Spannungsteiler R3, R4 vor dem Gleichtrichter D2, D3, D4, D5 erfolgt, wie es in Fig. 2 gezeigt ist, und dass in der Steuerschaltung SS eine Gleichrichtung der an dem Messpunkt B erfassten Spannung erfolgt oder direkt eine Wechselspannung ausgewertet wird, die auch negative Werte aufweisen kann.

Neben der Messung der Netzwechselspannung zum Ermitteln der Sollwertkurve bzw. eines Sollwerts ist es wie gesagt auch möglich, den Verlauf der Sollwertkurve beispielsweise durch eine Funktion oder eine Tabelle zu beschreiben, die in einem Speicher, der mit der Steuerschaltung der Leistungsfaktorkorrekturschaltung assoziiert ist abgelegt ist. Die Steuerschaltung liest dann diese Funktion bzw. Tabelle synchron mit dem Verlauf der Netzwechselspannung oder der Kondensatorspannung aus.

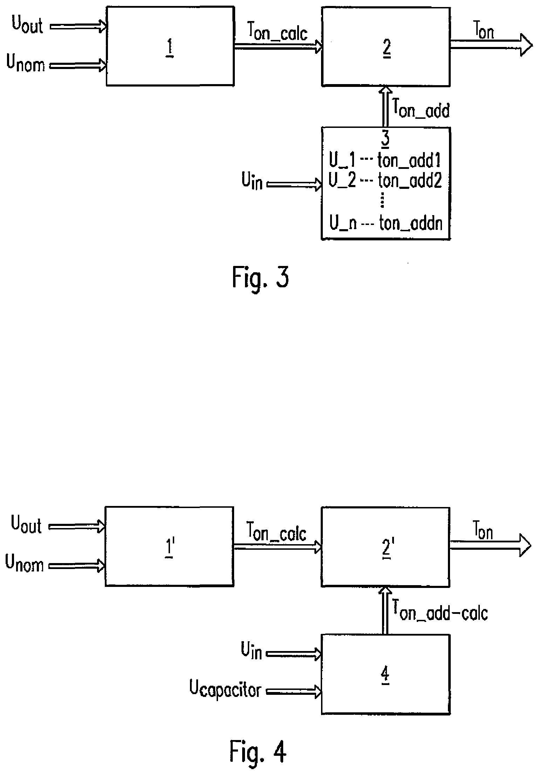

Fig. 3 zeigt schematisch wie die Steuerschaltung SS die Einschaltzeitdauer Tₒₙ bestimmt. Die Steuerschaltung weist dafür zunächst eine Steuereinheit 1 auf, der die Ausgangsspannung Uₒᵤₜ der PFC Schaltung als Rückführgröße zugeführt ist. Weiter ist der Steuereinheit 1 ein Sollwert Uₙₒₘ für die Ausgangsspannung zugeführt. Aus diesen beiden Eingangswerten berechnet die Steuereinheit 1 einen vorläufigen Wert T_{on_calc} für die Einschaltdauer des Schalters S1.

Diese errechnete Einschaltdauer (T_{on_calc}) wird einer Klirrfaktor-Kompensationseinheit 2 zugeführt. Diese ruft einen Kompensationsfaktor T_{on_add} für die Einschaltzeitdauer aus einer Nachschlagtabelle 3 (Look-Up-Table) ab, abhängig von einem erfassten Wert der gleichgerichteten Wechselspannung Uᵢₙ oder einem entsprechenden Wert einer Hinterlegten Sollwertkurve. Der Kompensationsfaktor T_{on_add} für die Einschaltzeitdauer Tₒₙ bestimmt sich also durch die erfasste Eingangsspannung U_{in,} die der Steuerschaltung SS zugeführt wird und die beispielsweise an einem einem Gleichrichter nachgeschalteten Spannungsteiler R3, R4/R3', R4' von der Steuerschaltung SS erfasst wird. Alternativ kann statt der Nachschlagtabelle auch eine Funktion in einem Speicher der Steuerschaltung SS hinterlegt sein, so dass der Kompensationsfaktor T_{on_add} für die Einschaltzeitdauer Tₒₙ durch Auswerten der Funktion für den zugeführten Eingangsspannungswert Uᵢₙ durch die Steuerschaltung SS bestimmt wird.

In der Klirrfaktor-Kompensationseinheit 2 wird dann der von der Nachschlagetabelle/durch die Funktion gelieferte Kompensationsfaktor T_{on_add} für die Einschaltzeitdauer Tₒₙ mit der von der Steuereinheit 1 berechneten Einschaltzeitdauer T_{on_calc} zu der durch den Schalter S1 einzustellenden Einschaltzeitdauer Tₒₙ kombiniert.

Die Erfindung kann weiter verbessert werden wenn statt der Nachschlagetabelle bzw. der Hinterlegung einer Funktion tatsächlich die Kondensatorspannung erfasst wird, da sonst die Nachschlagetabelle für alle verwendeten Lasten und Versorgungsvarianten spezifiziert sein müsste. Da hier oftmals Kompromisse eingegangen werden müssen, führt eine Kompensation mittels direkter Messung der gleichgerichteten Netzwechselspannung häufig zu besseren Ergebnissen.

Daher liegt eine weitere Verbesserung in dem Verfahren, wie es schematisch in Fig. 4 gezeigt ist. Anstelle einer Nachschlagetabelle wird hier eine Klirrfaktor-Korrektureinheit 4 eingesetzt, die eine der Steuerschaltung SS zugeführte Eingangsspannung Uᵢₙ sowie die Spannung U_{capacitator} über dem Kondensator C_{HF}, beispielsweise in einer PI-/PID-Regelung, auswertet. Die Korrektur erfolgt auch hier, um den Einfluss des kapazitiven Effekts des Kondensators C_{HF} zu reduzieren.

Die Steuereinheit 1`, die im Wesentlichen der Steuereinheit 1 aus Fig. 3 entsprechen kann, führt eine relativ langsame Regelung der Einschaltzeitdauer Tₒₙ auf Basis der rückgeführten Ausgangsspannung Uₒᵤₜ der PFC-Schaltung und einem Sollwert für die Spannung Uₙₒₘ durch und berechnet eine vorläufige Einschaltzeitdauer als T_{on_calc}. Die Klirrfaktor-Korrektureinheit 4 berechnet nun basierend auf den von ihr ausgewerteten Spannungswert Uᵢₙ, der die gleichgerichtet Netzwechselspannung wiedergibt, und der Kondensatorspannung U_{capacitator} den Kompensationsfaktor T_{on add_calc} für die Einschaltzeitdauer. Dieser Wert wird dann von der Klirrfaktor-Kompensationseinheit 2', die im Wesentlichen der Klirrfaktor-Kompensationseinheit 2 aus Fig. 3 entsprechen kann, mit der von der Steuereinheit 1' berechneten Einschaltzeitdauer T_{on_calc} zu der tatsächlich für das Schalter S1 einzustellenden Einschaltzeitdauer Tₒₙ kombiniert.

Zu bemerken ist hierbei, dass die von der Klirrfaktor-Korrektureinheit 4 vorgenommene Regelung wesentlich schneller ist, als die von der Steuereinheit 1` durchgeführten Regelung, wobei auch die Regelung der Steuereinheit 1/1' ebenfalls durch einen PI- oder PID-Regler erfolgen kann. Statt einem PI- oder PID-Regler kann auch jeweils ein anderer geeigneter Regler eingesetzt werden.

Fig. 5 zeigt eine Ausführungsform einer erfindungsgemäßen Schaltung, bei der die Spannung über dem Filterkondensator C_{HF} an einem Mittenpunkt A eines Spannungsteilers aus den Widerständen R1, R2 erfolgt. Die Steuerschaltung SS erfasst dabei die Spannung über dem Kondensator C_{HF} und steuert gleichzeitig den Schalter S1. Zudem erfasst die Steuerschaltung SS eine gleichgerichtete Netzwechselspannung Uᵢₙ an einem Mittenpunkt B eines zweiten Spannungsteilers R3', R4'. In Fig. 5 erfolgt die Erfassung der gleichgerichteten Netzwechselspannung Uᵢₙ in einer separaten Erfassungsschaltung ES, die einen zweiten Gleichrichter aufweist, dem der zweite Spannungsteiler nachgeschaltet ist. Es erfolgt also eine Erfassung der Netzwechselspannung mit Hilfe eines zweiten Gleichrichters.

Es ist jedoch zu verstehen, dass die gleichgerichtete Netzwechselspannung Uᵢₙ auch durch Interpolation aus der an dem Kondensator C_{HF} gemessenen Spannung berechnet werden kann (z.B. aus einem Scheitelwert der gleichgerichtete Netzwechselspannung, einer Frequenz der gleichgerichteten Netzwechselspannung, ...).

Die so gestaltete Lösung erlaubt daher ein einfacheres Korrigieren des Klirrfaktors, da keine Look-up-Tabelle bzw. Funktion vorgesehen sein muss. Insgesamt wird so eine bessere Performanz über den gesamten Bereich der Eingangsspannung und Eingangsfrequenz sowie in Abhängigkeit mit einem größeren Lastbereich ermöglicht.

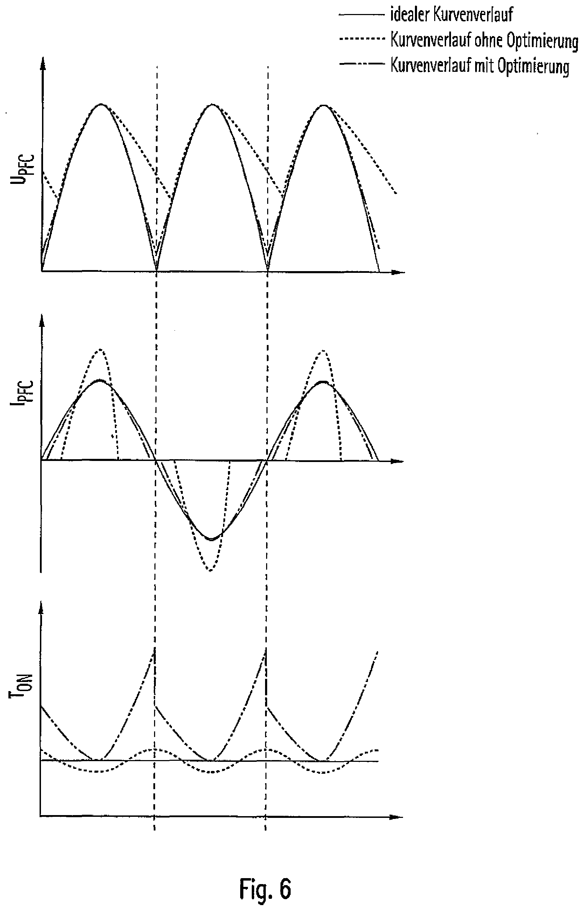

Fig. 6 zeigt ein schematisches Diagramm für den Verlauf der Eingangsspannung U_{PFC} der PFC-Schaltung (oben), der Stromaufnahme des Netzstroms I_{PFC} der PFC-Schaltung (Mitte) und der Einschaltzeitdauer Tₒₙ des Schalters S1 für eine erfindungsgemäße Schaltung aus den Figs. 2 und 5.

Der ideale Kurvenverlauf ist dabei jeweils gepunktet, ein Kurvenverlauf ohne Optimierung jeweils gestrichelt und der optimierte Kurvenverlauf strich-gepunktet dargestellt.

Es ist auch zu verstehen, dass nicht notwendigerweise die gleichgerichtete Netzwechselspannung als Sollwert erfasst werden muss. Es kann, wie anhand von Fig. 2 erläutert, auch die nicht-gleichgerichtete Netzwechselspannung von der Steuerschaltung erfasst werden, wobei dann durch die Steuerschaltung SS ein entsprechender Vorzeichenwechsel für Netzwechselspannung im Bereich der "negativen" Halbwellen in die Berechnung der Einschaltzeitdauer Tₒₙ bzw. in den Vergleich der Kondensatorspannung und des Sollwerts einbezogen werden muss.

## Patentansprüche

1. Aktiv getaktete Leistungsfaktorkorrekturschaltung (PFC), aufweisend:
- einen Eingang, an dem eine Netzwechselspannung zuführbar ist,
- einen Gleichrichter (D1, D2, D3, D4),
- einen ausgehend von dem Gleichrichter (D1, D2, D3, D4) gespeisten Filterkondensator (CMF),
- eine Induktivität,
- eine Steuerschaltung (SS), und
- einen Schalter (S1), der durch die Steuerschaltung (SS) steuerbar ist, um die Induktivität während einer Einschaltzeitdauer zu laden und während einer Ausschaltzeitdauer zu entladen, wobei
- die Steuerschaltung (SS) dazu eingerichtet ist, eine Einschaltzeitdauer des Schalters (S1) für eine Regelung der Ausgangsspannung (Uₒᵤₜ) der Leistungsfaktorkorrekturschaltung (PFC) zu bestimmen, eine Kondensatorspannung über dem Filterkondensator (CMF) zu messen und abhängig von der Messung der Kondensatorspannung die Einschaltzeitdauer des Schalters (S1) zu verändern,
**dadurch gekennzeichnet, dass**
- die Steuerschaltung dazu eingerichtet ist, eine Sollwertkurve, deren Verlauf der Netzwechselspannung, bei der jede zweite Halbwelle invertiert ist, entspricht, zu ermitteln, die Kondensatorspannung mit der Sollwertkurve zu vergleichen und abhängig davon die bestimmte Einschaltzeitdauer des Schalters (S1) zu verändern, um die Kondensatorspannung auf die Sollwertkurve zu regeln.

2. Leistungsfaktorkorrekturschaltung nach Anspruch 1,
- wobei die Steuerschaltung (SS) dazu eingerichtet ist, den Verlauf der Netzwechselspannung durch Messung zu erfassen, und wobei die Steuerschaltung (SS) dazu eingerichtet ist, zu einem Zeitpunkt einen Spannungswert der Netzwechselspannung zu bestimmen.

3. Leistungsfaktorkorrekturschaltung nach einem der vorgehenden Ansprüche,
- wobei die Steuerschaltung (SS) dazu eingerichtet ist, die Einschaltzeitdauer des Schalters (S1) zu verlängern während der Verlauf der Sollwertkurve nach Erreichen eines Scheitelwerts in Richtung Nulldurchgang verläuft.

4. Leistungsfaktorkorrekturschaltung nach einem der vorgehenden Ansprüche,
- wobei die Steuerschaltung (SS) dazu eingerichtet ist, die Einschaltzeitdauer des Schalters (S1) zu verkürzen während der Verlauf der Sollwertkurve in Richtung eines Scheitelwerts verläuft.

5. Leistungsfaktorkorrekturschaltung nach einem der vorgehenden Ansprüche,
- wobei die Steuerschaltung an wenigstens einem bestimmten Zeitpunkt einen Wert der Sollwertkurve mit dem Wert der Kondensatorspannung vergleicht.

6. Leistungsfaktorkorrekturschaltung nach einem der vorgehenden Ansprüche,
- wobei die Sollwertkurve in einem mit der Steuerschaltung (SS) verbundenen Speicher, insbesondere in einer Tabelle (3), gespeichert ist.

7. Leistungsfaktorkorrekturschaltung nach einem der vorgehenden Ansprüche, aufweisend
einen zweiten Gleichrichter für die Erfassung der Sollwertkurve, wobei die Erfassung der der Sollwertkurve an einem dem zweiten Geleichrichter nachgeschalteten Spannungsteiler (R3', R4') erfolgt.

8. Leuchte mit einer Leistungsfaktorkorrekturschaltung nach einem der Ansprüche 1 bis 7.

9. Betriebsgerät für ein Leuchtmittel umfassend eine Leistungsfaktorkorrekturschaltung nach einem der Ansprüche 1 bis 7.

10. Verfahren zur Steuerung einer aktiv getakteten Leistungsfaktorkorrekturschaltung, die einen Eingang aufweist, an dem eine Netzwechselspannung (Vₘₐᵢₙₛ) zuführbar ist, einen Gleichrichter (D1, D2, D3, D4), einen ausgehend von dem Gleichrichter (D1, D2, D3, D4) gespeisten Filterkondensator (CMF), und einen Schalter (S1), der durch eine Steuerschaltung (SS) steuerbar ist, um eine Induktivität während einer Einschaltzeitdauer zu laden und während einer Ausschaltzeitdauer zu entladen, mit den Schritten:
Bestimmen einer Einschaltzeitdauer des Schalters (S1) für eine Regelung der Ausgangsspannung (Uₒᵤₜ) der Leistungsfaktorkorrekturschaltung (PFC),
Messen einer Kondensatorspannung über dem Filterkondensator (CMF) und
Ändern der bestimmten Einschaltzeitdauer des Schalters (S1) basierend auf der gemessenen Kondensatorspannung,
**gekennzeichnet durch**
Ermitteln einer Sollwertkurve, deren Verlauf der Netzwechselspannung, bei der jede zweite Halbwelle invertiert ist, entspricht, und
Vergleichen der Kondensatorspannung mit der Sollwertkurve, wobei
die Einschaltzeitdauer des Schalters (S1) auf der Grundlage des Vergleichs geändert wird, um somit die Kondensatorspannung auf die Sollwertkurve zu regeln.

## Claims

1. Actively clocked power factor correction circuit (PFC), comprising:
- an input at which an AC supply voltage can be supplied,
- a rectifier (D1, D2, D3, D4),
- a filter capacitor (CMF) fed from the rectifier (D1, D2, D3, D4),
- an inductor,
- a control circuit (SS), and
- a switch (S1) which can be controlled by the control circuit (SS) in order to charge the inductor during an on period and to discharge it during an off period, wherein
- the control circuit (SS) is configured to set an on period of the switch (S1) for regulating the output voltage (Uₒᵤₜ) of the power factor correction circuit (PFC), to measure a capacitor voltage across the filter capacitor (CMF) and to change the on period of the switch (S1) depending on the measurement of the capacitor voltage,
**characterized in that**
- the control circuit is configured to determine a setpoint curve, the course of which corresponds to the AC supply voltage, in which every second half-wave is inverted, to compare the capacitor voltage to the setpoint curve and, as depending thereupon, to change the set on period of the switch (S1) in order to modulate the capacitor voltage to the setpoint curve.

2. Power factor correction circuit according to Claim 1,
- wherein the control circuit (SS) is configured to detect the curve of the AC supply voltage by measurement, and wherein the control circuit (SS) is configured to set a voltage value of the AC supply voltage at a point in time.

3. Power factor correction circuit according to either of the preceding claims,
- wherein the control circuit (SS) is configured to extend the on period of the switch (S1), while the course of the setpoint curve, after reaching a peak value, is running toward the zero crossing.

4. Power factor correction circuit according to any one of the preceding claims,
- wherein the control circuit (SS) is configured to shorten the on period of the switch (S1), while the course of the setpoint curve is running toward a peak value.

5. Power factor correction circuit according to any one of the preceding claims,
- wherein the control circuit compares a value of the setpoint curve to the value of the capacitor voltage at at least one specific point in time.

6. Power factor correction circuit according to any one of the preceding claims,
- wherein the setpoint curve is stored in a memory connected to the control circuit (SS), in particular in a table (3).

7. Power factor correction circuit according to any one of the preceding claims, comprising
a second rectifier for the detection of the setpoint curve, wherein the detection of the of the setpoint curve takes place at a voltage divider (R3', R4') connected downstream of the second rectifier.

8. Luminaire comprising a power factor correction circuit according to any one of Claims 1 to 7.

9. Operating device for a lighting device, comprising a power factor correction circuit according to any one of Claims 1 to 7.

10. Method for controlling an actively clocked power factor correction circuit which has an input at which an AC supply voltage (Vmains) can be supplied, a rectifier (D1, D2, D3, D4), a filter capacitor (CMF) with a feed coming from the rectifier (D1, D2, D3, D4), and a switch (S1) which can be controlled by a control circuit (SS) in order to charge an inductor during an on period and to discharge it during an off period, comprising the steps of:
setting an on period of the switch (S1) for regulating the output voltage (Uₒᵤₜ) of the power factor correction circuit (PFC),
measuring a capacitor voltage across the filter capacitor (CMF), and
changing the set on period of the switch (S1) on the basis of the measured capacitor voltage,
**characterized by**
determining a setpoint curve, the course of which corresponds to the AC supply voltage, in which every other half-wave is inverted, and
comparing the capacitor voltage to the setpoint curve, wherein
the on period of the switch (S1) is changed on the basis of the comparison in order to thus modulate the capacitor voltage to the setpoint curve.

## Revendications

1. Circuit de correction de facteur de puissance (PFC) cadencé de manière active, présentant :
- une entrée à laquelle peut être appliquée une tension alternative secteur,
- un redresseur (D1, D2, D3, D4),
- un condensateur de filtrage (CMF) alimenté à partir du redresseur (D1, D2, D3, D4),
- un inducteur,
- un circuit de commande (SS) et
- un commutateur (S1) qui peut être commandé par le circuit de commande (SS) pour charger l'inducteur pendant une période de connexion et le décharger pendant une période de déconnexion,
- le circuit de commande (SS) étant conçu pour déterminer une période de connexion du commutateur (S1) pour une régulation de la tension de sortie (Uₒᵤₜ) du circuit de correction de facteur de puissance (PFC), pour mesurer une tension de condensateur aux bornes du condensateur de filtrage (CMF) et pour modifier la période de connexion du commutateur (S1) en fonction de la mesure de la tension du condensateur,
**caractérisé en ce que**
- le circuit de commande est conçu pour déterminer une courbe de valeurs de consigne, dont l'allure correspond à celle de la tension alternative secteur, pour laquelle chaque deuxième demi-onde est inversée, pour comparer la tension du condensateur à la courbe de valeurs de consigne et pour modifier la période de connexion du commutateur (S1) en fonction de cette comparaison pour réguler la tension du condensateur sur la courbe de valeurs de consigne.

2. Circuit de correction de facteur de puissance selon la revendication 1,
- le circuit de commande (SS) étant conçu pour déterminer l'allure de la tension alternative secteur par une mesure et le circuit de commande (SS) étant conçu pour déterminer, à un instant, une valeur de tension de la tension alternative secteur.

3. Circuit de correction de facteur de puissance selon l'une quelconque des revendications précédentes,
- le circuit de commande (SS) étant conçu pour allonger la période de connexion du commutateur (S1) pendant que l'allure de la courbe de valeurs de consigne évolue vers un passage par zéro après avoir atteint une valeur de crête.

4. Circuit de correction de facteur de puissance selon l'une quelconque des revendications précédentes,
- le circuit de commande (SS) étant conçu pour raccourcir la période de connexion du commutateur (S1) pendant que l'allure de la courbe de valeurs de consigne évolue vers une valeur de crête.

5. Circuit de correction de facteur de puissance selon l'une quelconque des revendications précédentes,
- le circuit de commande comparant en au moins un instant déterminé une valeur de la courbe de valeurs de consigne à la valeur de la tension du condensateur.

6. Circuit de correction de facteur de puissance selon l'une quelconque des revendications précédentes,
- la courbe de valeurs de consigne étant enregistrée dans une mémoire reliée au circuit de commande (SS), en particulier dans un tableau (3).

7. Circuit de correction de facteur de puissance selon l'une quelconque des revendications précédentes, présentant
un deuxième redresseur pour l'enregistrement de la courbe de valeurs de consigne, l'enregistrement de la courbe de valeurs de consigne ayant lieu au niveau d'un diviseur de tension (R3', R4') monté en aval du deuxième redresseur.

8. Luminaire présentant un circuit de correction de facteur de puissance selon l'une quelconque des revendications 1 à 7.

9. Dispositif de fonctionnement pour un luminaire comprenant un circuit de correction de facteur de puissance selon l'une quelconque des revendications 1 à 7.

10. Procédé de commande d'un circuit de correction de facteur de puissance cadencé de manière active, qui présente une entrée à laquelle peut être appliquée une tension alternative secteur (Vmains), un redresseur (D1, D2, D3, D4), un condensateur de filtrage (CMF) alimenté à partir du redresseur (D1, D2, D3, D4) et un commutateur (S1), qui peut être commandé par un circuit de commande (SS) pour charger un inducteur pendant une période de connexion et le décharger pendant une période de déconnexion, présentant les étapes de :
détermination d'une période de connexion du commutateur (S1) pour une régulation de la tension de sortie (Uₒᵤₜ) du circuit de correction de facteur de puissance (PFC),
mesure d'une tension de condensateur aux bornes du condensateur de filtrage (CMF) et
modification de la période de connexion déterminée du commutateur (S1) sur la base de la tension mesurée du condensateur,
**caractérisé par**
la détermination d'une courbe de valeurs de consigne, dont l'allure correspond à celle de la tension alternative secteur, pour laquelle chaque deuxième demi-onde est inversée et
la comparaison de la tension du condensateur à la courbe de valeurs de consigne,
la période de connexion du commutateur (S1) étant modifiée sur la base de la comparaison pour ainsi réguler la tension du condensateur sur la courbe de valeurs de consigne.
